# EUROPÄISCHE PATENTSCHRIFT

(11) **EP 0 425 955 B1**
(45) Veröffentlichungstag und Bekanntmachung des Hinweises auf die Patenterteilung: **28.06.1995**
(21) Anmeldenummer: 90120184.8
(22) Anmeldetag: 20.10.1990
(51) Int. Cl.: G05D 23/19, B60H 1/00

(54) **Verfahren und Einrichtung zur Regelung der Innenraumtemperatur von Kraftfahrzeugen**
Method and apparatus for regulating the internal temperature of a motor vehicle
Procédé et dispositif de régulation de la température intérieure des véhicules automobiles

(30) Priorität: 26.10.1989 DE 3935592
(43) Veröffentlichungstag der Anmeldung: 08.05.1991
(73) Patentinhaber: Hella KG Hueck & Co., 59552 Lippstadt (DE)
(72) Erfinder: Knittel, Otto, W-4770 Soest (DE)

(56) Entgegenhaltungen:
- EP-A- 0 019 300
- WO-A-87/02528
- AT-A- 378 858
- DE-A- 3 611 987
- DE-A- 3 807 731
- US-A- 4 611 755

## Beschreibung

Die Erfindung betrifft ein Verfahren zur Regelung der Innenraumtemperatur von Kraftfahrzeugen, bei dem eine Solltemperatur vorgegeben wird, eine Innenraumtemperatur und eine Außentemperatur gemessen werden, bei dem ein Motor getaktet angesteuert wird, der ein Stellglied zur Beeinflussung der einem Innenraum zugeführten Wärmemenge verstellt, indem ein erstes Taktsignal erzeugt wird, das die Taktsignalerzeugung eines zweiten Taktsignals, zur Ansteuerung des Motors mittels eines Komparators, beeinflußt und eine Einrichtung zur Durchführung des Verfahrens.

Aus der deutschen Offenlegungsschrift DE-OS 29 20 717 ist ein Verfahren und eine Einrichtung zur Durchführung eines Verfahrens dieser Art bekannt. Bei der vorbekannten Einrichtung ist ein erster Impulsgenerator zum einen mit einem zweiten Impulsgenerator und zum anderen mit einem dritten Impulsgenerator verbunden. Die Impulsgeneratoren sind hier als Rechteckgeneratoren ausgebildet. An dem zweiten Impulsgenerator sind ein Innenraumtemperaturfühler und ein Außentemperaturfühler angeschlossen. An dem dritten Impulsgenerator ist ein Solltemperaturgeber angeschlossen. Die Ausgänge des zweiten Impulsgenerators und des dritten Impulsgenerators sind mit einem Komparator verbunden, der einen Motor ansteuert, der ein Stellglied zur Beeinflussung der einem Innenraum zugeführten Wärmemenge verstellt. Zudem ist der Komparator mit dem ersten Impulsgenerator verbunden.

Der erste Impulsgenerator liefert Impulse gleichbleibender Breite jeweils beginnend mit dem Ende eines Vergleichsimpulses von dem Komparator. Entsprechend dieser einlaufenden Signale steuert der erste Impulsgenerator den zweiten und dritten Impulsgenerator an. Die Impulsbreite, die der zweite Impulsgenerator erzeugt, ist dabei proportional der Innenraumtemperatur und der Außentemperatur. Die Breite der von dem dritten Impulsgenerator abgegebenen Impulse ist der vorgegebenen Solltemperatur proportional. Die von dem ersten Impulsgenerator und dem zweiten Impulsgenerator erzeugten Impulse werden durch den Komparator verglichen. Der Komparator bildet die Differenzimpulse, durch die der Motor getaktet angesteuert wird. Je nach der erforderlichen Laufrichtung des Motors ist dabei jeweils ein Anschluß des Motors auf Masse gelegt, während der andere Anschluß des Motors mit den Differenzimpulsen angesteuert wird.

Als nachteilig erweist sich hierbei, daß für die getaktete Ansteuerung des Motors drei Impulsgeneratoren erforderlich sind, wodurch die Herstellung der Einrichtung zur Durchführung des Verfahrens teuer und aufwendig ist.

Als besonders nachteilig erweist sich bei dem vorbekannten Verfahren und der Einrichtung zur Durchführung des Verfahrens, daß bei der Regelung der Innenraumtemperatur kein Lagesignal von dem, von dem Motor zu verstellenden, Stellglied berücksichtigt wird, wodurch eine schnelle, exakte Regelung und Einstellung der dem Innenraum zugeführten Wärmemenge nicht möglich ist und die Stabilität der Regelung nicht gegeben ist.

Der Erfindung liegt die Aufgabe zugrunde, ein Verfahren zur Regelung der Innenraumtemperatur von Kraftfahrzeugen und eine Einrichtung zur Durchführung des Verfahrens zu schaffen, daß unter Einsparung von Bauteilen möglichst einfach und kostengünstig durchführbar und herstellbar ist und bei dem die Innenraumtemperatur möglichst schnell, einfach und exakt in Abhängigkeit von einer vorgegebenen Solltemperatur, einer gemessenen Innenraumtemperatur, einer gemessenen Außentemperatur und einem Lagesignal des Stellglieds geregelt wird.

Die Aufgabe wird erfindungsgemäß dadurch gelöst, daß ein Differenzsignal aus der Solltemperatur, der Innenraumtemperatur, der Außentemperatur und einem Lagesignal, das die Lage des Stellglieds angibt, gebildet wird, daß das erste Taktsignal zum einen den Motor über einen zweiten Anschluß ansteuert und zum anderen das zweite Taktsignal synchronisiert, daß der Komparator aus dem zweiten Taktsignal und dem Differenzsignal ein drittes Taktsignal bildet, das den Motor über einen ersten Anschluß ansteuert und daß der wirksam werdende Motorstrom der Differenz aus dem ersten Taktsignal und dem dritten Taktsignal entspricht.

Es ist von Vorteil, daß ein Differenzsignal aus der Solltemperatur, der Innenraumtemperatur, der Außentemperatur und einem Lagesignal, das die Lage des Stellglieds angibt, gebildet wird, weil somit auf möglichst einfache und kostengünstige Weise ein Differenzsignal gebildet wird, daß alle für die Regelung der Innenraumtemperatur notwendigen Regelgrößen beinhaltet, so daß in alleiniger Abhängigkeit von diesem Differenzsignal eine Regelung der Innenraumtemperatur erfolgen kann.

Dadurch, daß das erste Taktsignal zum einen den Motor über einen zweiten Anschluß ansteuert und und zum anderen das zweite Taktsignal synchronisiert, daß der Komparator aus dem zweiten Taktsignal und dem Differenzsignal ein drittes Taktsignal bildet, das den Motor über einen ersten Anschluß ansteuert, und daß der wirksam werdende Motorstrom der Differenz aus dem ersten Taktsignal und dem dritten Taktsignal entspricht, ergibt sich der Vorteil eines besonders einfachen und kostengünstigen Verfahrensablaufs und -aufbaus, da der Motor zum einen direkt von dem ersten Taktsignal angesteuert wird und zum anderen auf einfache und kostengünstige Weise durch die synchronisierte Erzeugung eines zweiten Taktsignals und den Vergleich des zweiten Taktsignals mit dem Differenzsignal ein drittes Taktsignal gebildet wird, das den Motor ansteuert.

Besonders vorteilhaft ist dabei, daß für die Bildung des Differenzsignals ein Lagesignal herangezogen wird, das die Lage des Stellglieds angibt, weil somit auf einfache und kostengünstige Weise eine möglichst schnelle und stabile Regelung der Innenraumtemperatur gewährleistet wird, da die getaktete Ansteuerung des Motors von der Lage des Stellglieds zum Verstellen der dem Innenraum zugeführten Wärmemenge abhängt.

Es ist von Vorteil, daß der Motor bei Gleichheit des ersten und des dritten Taktsignals steht, weil somit eine möglichst einfache Regelung, Ansteuerung und Beschaltung erreicht wird, wodurch die Kosten für eine Einrichtung zur Durchführung des Verfahrens herabgesetzt werden.

Dadurch, daß der Motor bei Ungleichheit des ersten und des dritten Taktsignals je nach dem anstehenden Differenzsignal im Rechts- oder Linkslauf betrieben wird, ergibt sich der Vorteil einer besonders einfachen und kostengünstigen, getakteten Ansteuerung des Motors und damit einer besonders einfachen und kostengünstigen Regelung der Innenraumtemperatur.

Es ist vorteilhaft, daß der Regelvorgang beendet ist, wenn das erste und das dritte Taktsignal gleich sind, weil somit für alle anstehenden, durch das Differenzsignal verknüpften Regelgrößen ein Gleichgewichtsszustand erreicht wird, bei dem dem Innenraum über das Stellglied eine vorgegebene Wärmemenge zugeführt wird, die sicher stellt, daß die Innenraumtemperatur der vorgegebenen Solltemperatur entspricht.

Dadurch, daß das erste Taktsignal ein festes Puls-Pausen-Verhältnis aufweist, ergibt sich der Vorteil, daß auf einfache und kostengünstige Weise ein Referenzsignal sowohl für die Ansteuerung des Motors als auch für die Synchronisation des zweiten Taktsignals erzeugt wird.

Es ist von Vorteil, daß das erste Taktsignal ein erstes Rechtecksignal ist, daß das zweite Taktsignal ein Sägezahnsignal oder ein Sinussignal ist und daß das dritte Taktsignal ein zweites Rechtecksignal mit variablem Puls-Pausen-Verhältnis ist, weil sich somit eine besonders einfache und kostengünstige Durchführbarkeit des Verfahrens ergibt, da der Motor von zwei Rechtecksignalen angesteuert wird und das zweite Rechtecksignal auf einfache Weise durch Vergleich des synchronisiert erzeugten Sägezahnsignals oder Sinussignals mit dem Differenzsignal erzeugt wird, wobei schon bei einem kleinen Amplitudenhub des Sägezahnsignals ein zweites Rechtecksignal erzeugt wird, das eine sichere Ansteuerung des Motors gewährleistet.

In diesem Zusammenhang ist es besonders vorteilhaft, daß der Solltemperaturgeber, der Innenraumtemperaturfühler, der Außentemperaturfühler und ein Lagesignalgeber, der ein Lagesignal entsprechend der Stellung des Stellglieds erzeugt, mit einem Subtrahierer verbunden sind, daß der Subtrahierer mit einem ersten Eingang des Komparators verbunden ist, daß der Ausgang des Komparators mit einem ersten Anschluß des Motors verbunden ist, daß der erste Impulsgenerator zum einen mit einem zweiten Anschluß des Motors und zum anderen mit dem zweiten Impulsgenerator verbunden ist und daß der zweite Impulsgenerator mit einem zweiten Eingang des Komparators verbunden ist, weil somit eine Einrichtung zur Durchführung des Verfahrens geschaffen wird, die einen möglichst einfachen und kostengünstigen Aufbau aufweist und durch Berücksichtigung des Lagesignals von einem Lagesignalgeber für die Regelung der Innenraumtemperatur eine möglichst schnelle und stabile Regelung der Innenraumtemperatur bei Einsparung kostenintensiver Bauteile gewährleistet.

Dadurch, daß der Subtrahierer aus Widerständen aufgebaut ist, ergibt sich der Vorteil einer besonders einfachen und kostengünstigen Verknüpfung der Regelgrößen, wobei die Signale von dem Innenraumtemperaturfühler, dem Solltemperaturfühler, dem Außentemperaturfühler und dem Lagesignalgeber einfach aneinander anpaßbar sind und Fehlströme in dem Subtrahierer vermieden werden.

In diesem Zusammenhang ist es besonders vorteilhaft, daß die Eingänge des Komparators hochohmig sind.

Es ist besonders vorteilhaft, daß der erste Impulsgenerator ein Rechteckgenerator ist, der Rechteckimpulse mit einem festen Puls-Pausen-Verhältnis erzeugt, weil somit auf einfache und kostengünstige Weise ein Referenzsignal zum einen zur Ansteuerung des Motors und zum anderen für die Synchronisation des zweiten Impulsgenerators erzeugt wird.

Dadurch, daß der zweite Impulsgenerator ein Sägezahngenerator oder ein Sinusgenerator ist, ergibt sich der Vorteil, daß auf einfache und kostengünstige Weise ein Sägezahnsignal oder ein Sinussignal erzeugt wird, das dem ersten Rechtecksignal synchron ist und das durch einen einfachen Vergleich mit dem Differenzsignal von dem Subtrahierer die Erzeugung eines zweiten Rechtecksignals ermöglicht, das eine funktionsgerechte Ansteuerung des Motors in Abhängigkeit von den vorgegebenen Parametern drehrichtungsabhängig gewährleistet.

Es ist von Vorteil, daß der Rechteckgenerator, der Sägezahngenerator oder der Sinusgenerator, der Subtrahierer und/oder der Komparator in einem integrierten Bauteil zusammengefaßt sind, weil somit ein besonders kostengünstiger und einfacher Aufbau erreicht wird. Der gleiche Vorteil ergibt sich, wenn der Rechteckgenerator, der Sägezahngenerator oder der Sinusgenerator, der Subtrahierer und/oder der Komparator Teil eines Mikrorechners sind.

Dadurch, daß in der Verbindung zwischen dem Rechteckgenerator und dem Motor und/oder in der Verbindung zwischen dem Komparator und dem Motor eine Endstufe angeordnet ist, ergibt sich der Vorteil, daß der Komparator und/oder der Rechteckgenerator keine Leistungsendstufen aufzuweisen brauchen. Vorteilhaft ist eine Endstufe, die aus zwei Leistungsoperationsverstärkern besteht, wobei jeder Operationsverstärker einen der Anschlüsse des Motors ansteuert.

Es ist von Vorteil, daß der Lagesignalgeber ein Potentiometer ist, wodurch auf einfache und kostengünstige Weise ein Lagesignal des Stellglieds für die Regelung der Innenraumtemperatur zur Verfügung gestellt wird.

Dadurch, daß der Lagesignalgeber eine Zählschaltung für die Umdrehung des Motors ist, ergibt sich der Vorteil einer möglichst exakten Bestimmung der Lage des Stellglieds, wodurch die Regelung der Innenraumtemperatur weiter verbessert wird.

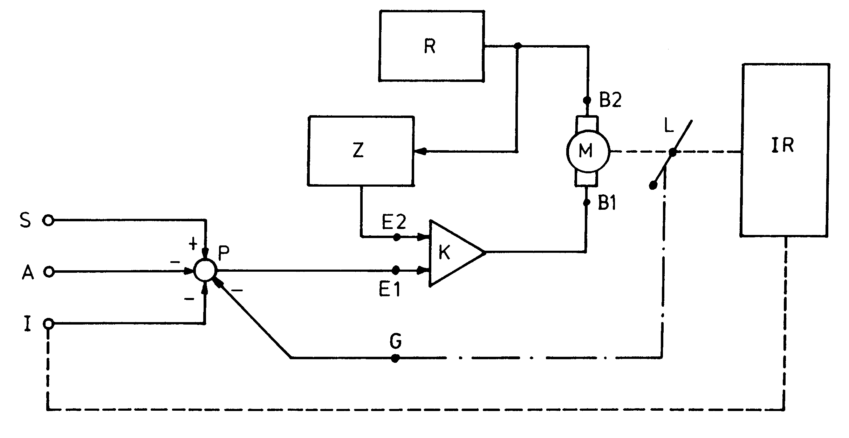

Ein Ausführungsbeispiel der Erfindung ist in der Zeichnung dargestellt und wird im folgenden näher beschrieben.

Die einzige Zeichnung zeigt ein Blockdiagramm der erfindungsgemäßen Einrichtung zur Durchführung des Verfahrens.

Ein Subtrahierer (P) ist bei der erfindungsgemäßen Einrichtung mit einem Solltemperaturgeber (S) verbunden, der z. B. als ein Potentiometer ausgebildet sein kann, über das der Einrichtung eine Solltemperatur für den Innenraum (IR) vorgegeben werden kann. Zur Messung einer Innenraumtemperatur und einer Außentemperatur ist der Subtrahierer (P) zudem mit einem Innenraumtemperaturfühler (I) und mit einem Außentemperaturfühler (A) elektrisch leitend verbunden. Der Innenraumtemperaturfühler (I) und der Außentemperaturfühler (A) können dabei z. B. als Thermistoren ausgebildet sein. Um eine schnelle und exakte Regelung der Innenraumtemperatur eines Innenraums (IR) zu erreichen, ist der Subtrahierer (P) zudem mit einem Lagesignalgeber (G) verbunden, der die Lage eines Stellglieds (L) mißt und dem Subtrahierer (P) ein Lagesignal zuführt, das der Lage des Stellglieds (L) entspricht. Das Stellglied (L) beeinflußt dabei die dem Innenraum zugeführte Wärmemenge. Der Lagesignalgeber (G) kann dabei in einer einfachen Ausführungsform als ein Potentiometer ausgebildet sein. Für eine besonders genaue Regelung der Innenraumtemperatur kann der Lagesignalgeber (G) auch eine Zählschaltung für die Umdrehungen des Motors (M) sein, der das Stellglied (L) verstellt. Das Stellglied (L) kann je nach Anwendungszweck für die Einrichtung zur Regelung der Innenraumtemperatur eine Luftmischklappe zur Mischung erwärmter mit kühler Luft sein oder aber auch als ein Wasserventil ausgebildet sein, das den Zufluß erwärmten Wassers zu einer Heizeinrichtung beeinflußt. Durch die Zuführung eines Solltemperatursignals, eines Außentemperatursignals und eines Lagesignals zu dem Subtrahierer (P) kann somit auf besonders einfache und kostengünstige Weise ein Differenzsignal gebildet werden, das der Regelung der Innenraumtemperatur zugrunde gelegt werden kann und alle Regelgrößen berücksichtigt. Dabei ist es besonders vorteilhaft, wenn die Differenzbildung erfolgt, indem dem Subtrahierer (P) die Solltemperatur als Spannungswert mit positivem Vorzeichen zugeführt wird und die Innenraumtemperatur, die Außentemperatur und das Lagesignal dem Subtrahierer (P) als Spannungswerte mit negativem Vorzeichen zugeführt werden, weil sich somit ein besonders einfacher und kostengünstiger Aufbau der Einrichtung ergibt und zudem das Signal der Solltemperatur als absoluter Bezugswert dient. Bei einem anderen Ausführungsbeispiel können die Solltemperatur, die Außentemperatur, die Innenraumtemperatur und das Lagesignal dem Subtrahierer (P) auch als Signale mit anderem Vorzeichen zugeführt werden. Um eine besonders einfache und kostengünstige Ausführung der Einrichtung zu gewährleisten, können der Solltemperaturgeber (S) und/oder der Außentemperaturfühler (A) und/oder der Innenraumtemperaturfühler (I) und/oder der Lagesignalgeber (G) über je einen Anpaßwiderstand mit dem Subtrahierer (P) verbunden sein, wodurch die Relation der Signale zueinander auf besonders einfache Weise festgelegt wird und das an dem Subtrahierer (P) entstehende Differenzsignal nicht weiter für die Regelung der Innenraumtemperatur beeinflußt werden braucht.

Bei einem anderen Ausführungsbeispiel kann der Subtrahierer (P) zu diesem Zweck aus Widerständen aufgebaut sein.

In jedem Fall wird dabei gewährleistet, daß keine Fehlströme in dem Subtrahierer (P) auftreten.

Die Eingänge (E1, E2) des Komparators (K) sind hochohmig ausgelegt.

Es ist somit möglich, den Subtrahierer direkt mit dem ersten Eingang (E1) eines Komparators (K) zu verbinden, wodurch sich ein besonders einfacher und kostengünstiger Aufbau der Einrichtung ergibt.

Um aus dem an dem ersten Eingang (E1) des Komparators (K) anstehenden Differenzsignal ein Taktsignal zur Ansteuerung des Motors (M) bilden zu können, ist der zweite Eingang (E2) des Komparators (K) hier beispielhaft elektrisch leitend mit einem Sägezahngenerator (Z) verbunden. Der Ausgang des Komparators (K) ist dabei elektrisch leitend mit einem ersten Anschluß (B1) des Motors (M) verbunden. Der Sägezahngenerator (Z) liefert an dem zweiten Eingang (E2) des Komparators (K) ein Sägezahnsignal, das einen vorgegebenen Amplitudenhub aufweist.

Der Sägezahngenerator (Z) ist zudem elektrisch leitend mit einem Rechteckgenerator (R) verbunden, der ein erstes Rechtecksignal mit einem vorgegebenen, festen Puls-Pausen-Verhältnis erzeugt. Dieses erste Rechtecksignal des Rechteckgenerators (R) synchronisiert die Erzeugung des Sägezahnsignals des Sägezahngenerators (Z). Zudem ist der Rechteckgenerator (R) elektrisch leitend mit dem zweiten Anschluß (B2) des Motors (M) verbunden, um dem Motor (M) mit dem ersten Rechtecksignal getaktet anzusteuern. Der Motor (M) verstellt dabei das Stellglied (L) zur Beeinflussung der dem Innenraum (IR) zugeführten Wärmemenge. Diese Wirkung ist durch eine gestrichelte Linie in der Zeichnung dargestellt. Durch eine weitere gestrichelte Linie zwischen dem Innenraumtemperaturfühler (I) und dem Innenraum (IR) wird in der Zeichnung zudem verdeutlicht, daß der Innenraumtemperaturfühler (I) die Innenraumtemperatur des Innenraums (IR) mißt. Durch eine strichpunktierte Linie in der einzigen Zeichnung ist zudem die Ankoppelung des Lagesignalgebers (G) an das Stellglied (L) gekennzeichnet. Bei einem anderen Ausführungsbeispiel, bei dem der Lagesignalgeber (G) eine Zählschaltung für die Umdrehung des Motors (M) ist, kann der Lagesignalgeber (G) zum Beispiel mit einem Hall-Element an dem Motor (M) verbunden sein.

Bei einem anderen, hier nicht gezeigten, Ausführungsbeispiel kann der Motor (M) durch eine Leistungsendstufe angesteuert werden, die z. B. aus zwei Operationsverstärkern aufgebaut sein kann, von denen je einer einen der Anschlüsse (B1, B2) des Motors (M) ansteuert.

Im folgenden wird kurz anhand der beschriebenen Einrichtung das Verfahren zur Regelung der Innenraumtemperatur näher beschrieben.

Durch den Solltemperaturgeber (S) wird eine bestimmte Solltemperatur für den Innenraum (IR) vorgegeben. Zudem wird eine Außentemperatur und eine Innenraumtemperatur gemessen. Um eine möglichst schnelle und stabile Regelung der dem Innenraum (IR) zugeführten Wärmemenge zu ermöglichen, wird die Lage des Stellglieds (L) durch einen Lagesignalgeber (G) gemessen. Auf besonders einfache und kostengünstige Weise wird durch Differenzbildung aus der Solltemperatur, der Außentemperatur, der Innenraumtemperatur und dem Lagesignal an dem Subtrahierer (P) ein Differenzsignal gebildet, das alle Regelgrößen für die Regelung der Innenraumtemperatur derart berücksichtigt, daß die Regelung der Innenraumtemperatur allein in Abhängigkeit von diesem Differenzsignal durchgeführt werden kann. Dieses Differenzsignal kann somit direkt einem Komparator (K) zur getakteten Ansteuerung eines Motors (M) zugeführt werden. Zu diesem Zweck ist der zweite Eingang (E2) des Komparators (K) mit einem Sägezahngenerator (Z) verbunden, der dem Komparator (K) ein Sägezahnsignal zuführt, mit dem das Differenzsignal verglichen wird. Zur Ansteuerung des Motors (M) mit einem ersten Rechtecksignal, das ein festes Puls-Pausen-Verhältnis aufweist, ist der zweite Anschluß (B2) des Motors (M) mit einem Rechteckgenerator (R) verbunden, der dieses erste Rechtecksignal als ein Referenzsignal dem Motor (M) zuführt. Der Rechteckgenerator (R) ist zudem mit dem Sägezahngenerator (Z) verbunden, so daß das erste Rechtecksignal die Erzeugung des Sägezahnsignals des Sägezahngenerators (Z) synchronisiert. Das erste Rechtecksignal kann dabei beispielhaft ein Taktverhältnis von 1:1 aufweisen. Es sind aber auch andere Taktverhältnisse denkbar. Jeweils mit einer ansteigenden Flanke des ersten Rechtecksignals oder aber mit einer abfallenden Flanke des Rechtecksignals wird die Spannung des Sägezahnsignals auf Null gesetzt. Auf diese Weise erhält man eine besonders einfache Synchronisation des Sägezahnsignals durch das erste Rechtecksignal. Der Komparator (K) vergleicht das Sägezahnsignal mit dem Differenzsignal und liefert an seinem Ausgang somit ein zweites Rechtecksignal, das den Motor (M) über den ersten Anschluß (B1) ansteuert. Die Verstärkung ist dabei zum einen durch die Amplitude des Sägezahnsignals bestimmt und zum anderen durch die Steilheit der Fühlerkennlinien, das heißt des Lagesignalgebers (G), des Außentemperaturfühlers (A) und des Innenraumtemperaturfühlers (I) gegeben.

Der Motor (M) der hier beispielhaft als ein Gleichstrommotor ausgebildet ist, der zwei Laufrichtungen aufweist, wird somit über den zweiten Anschluß (B2) mit einem ersten Rechtecksignal angesteuert, das ein festes Puls-Pausen-Verhältnis aufweist und wird über einen ersten Anschluß (B1) mit einem zweiten Rechtecksignal angesteuert, das ein Puls-Pausen-Verhältnis aufweist, das von dem an dem ersten Eingang (E1) des Komparators anstehenden Differenzsignal abhängig ist. Entspricht das erste Rechtecksignal dem zweiten Rechtecksignal, so ist kein Regelvorgang erforderlich, das heißt, die dem Subtrahierer (P) zugeführten Regelgrößen, sind in einem Gleichgewicht, so daß dem Innenraum (IR) über das Stellglied (L) eine Wärmemenge zugeführt wird, die den Innenraum (IR) auf eine Temperatur aufheizt, die der Solltemperatur an dem Solltemperaturgeber (S) entspricht und bei dem auch durch die Außentemperatur an dem Außentemperaturfühler (A) keine Verstellung des Stellglieds (L) erforderlich ist. Bei Gleichheit des ersten und des zweiten Rechtecksignals steht somit der Motor (M). Der Motor (M) weist dabei einen vorgegebenen Ruhebereich auf, das heißt eine durch die Mechanik des Motors (M) bestimmte Trägheit, so daß bei kleinen Abweichungen des ersten Rechtecksignals von dem zweiten Rechtecksignal der Motor (M) nicht anläuft.

Weicht das zweite Rechtecksignal von dem ersten Rechtecksignal stärker ab als durch die Trägheit und das Ansprechverhalten des Motors (M) vorgegeben, so wird der Motor (M) je nach dem zeitlichen Verlauf des Eintreffens des ersten Rechtecksignals und des zweiten Rechtecksignals, das heißt, in Abhängigkeit von dem Differenzsignal an dem ersten Eingang (E1) des Komparators (K) entweder im Rechts- oder Linkslauf angetrieben und verstellt solange das Stellglied (L) bis durch Nachregelung an dem Subtrahierer (P) ein Differenzsignal erzeugt wird, das eine Gleichheit des ersten Rechtecksignals zu dem zweiten Rechtecksignal gewährleistet, so daß der Motor (M) stehenbleibt und dem Innenraum (IR) eine konstante Wärmemenge zugeführt wird, die sicherstellt, daß die vorgegebene Solltemperatur eingehalten wird.

Da an dem zweiten Anschluß (B2) des Motors (M) ein erstes Rechtecksignal mit einem festen Puls-Pausen-Verhältnis anliegt, wird der Motor (M) somit immer dann in einer der vorgegebenen Laufrichtungen betrieben, wenn sich das an dem ersten Eingang (E1) des Komparators (K) anstehende Differenzsignal ändert. Die Änderung kann dabei durch ein Verstellen der Solltemperatur an dem Solltemperaturgeber (S), durch eine Änderung der Außentemperatur, die durch den Außentemperaturfühler (A) gemessen wird, oder aber durch eine Änderung der Innenraumtemperatur, die durch den Innenraumtemperaturfühler (I) gemessen wird, vorgegeben werden. Bei jeder dieser Änderungen des Differenzsignals, die zu einer Ungleichheit des zweiten Rechtecksignals von dem ersten Rechtecksignal führt, wird der Motor (M) solange betrieben, bis über das Stellglied (L) dem Innenraum eine Wärmemenge zugeführt wird, die sicherstellt, daß die vorgegebene Solltemperatur eingehalten wird. Das heißt, ein Nachregeln erfolgt solange bis die Gleichheit des ersten und des zweiten Rechtecksignals gegeben ist und der Motor (M) steht.

Die Einrichtung zur Durchführung des Verfahrens kann in einer besonders einfachen und kostengünstigen Ausführungsform derart ausgebildet sein, daß der Rechteckgenerator (R), der Sägezahngenerator (Z), der Subtrahierer und/oder der Komparator (K) in einem integriertem Bauteil zusammengefaßt sind oder aber Teil eines Mikrorechners sind, der weitere Steuer- und Regelfunktionen übernimmt.

## Patentansprüche

1. Verfahren zur Regelung der Innenraumtemperatur von Kraftfahrzeugen, bei dem eine Solltemperatur vorgegeben wird, eine Innenraumtemperatur und eine Außentemperatur gemessen werden, bei dem ein Motor getaktet angesteuert wird, der ein Stellglied zur Beeinflussung der einem Innenraum zugeführten Wärmemenge verstellt, indem ein erstes Taktsignal erzeugt wird, das die Taktsignalerzeugung eines zweiten Taktsignals, zur Ansteuerung des Motors mittels eines Komparators, beeinflußt, dadurch gekennzeichnet, daß ein Differenzsignal aus der Solltemperatur, der Innenraumtemperatur, der Außentemperatur und einem Lagesignal, das die Lage des Stellglieds (L) angibt, gebildet wird, daß das erste Taktsignal zum einen den Motor (M) über einen zweiten Anschluß (B2) ansteuert und zum anderen das zweite Taktsignal synchronisiert, daß der Komparator (K) aus dem zweiten Taktsignal und dem Differenzsignal ein drittes Taktsignal bildet, das den Motor (M) über einen ersten Anschluß (B1) ansteuert, und daß der wirksam werdende Motorstrom der Differenz aus dem ersten Taktsignal und dem dritten Taktsignal entspricht.

2. Verfahren nach Anspruch 1, dadurch gekennzeichnet, daß der Motor (M) bei Gleichheit des ersten und des dritten Taktsignals steht.

3. Verfahren nach Anspruch 2, dadurch gekennzeichnet, daß der Motor (M) bei Ungleichheit des ersten und des dritten Taktsignals je nach dem anstehenden Differenzsignal im Rechts- oder Linkslauf betrieben wird.

4. Verfahren nach Anspruch 3, dadurch gekennzeichnet, daß der Regelvorgang beendet ist, wenn das erste und dritte Taktsignal gleich sind.

5. Verfahren nach Anspruch 4, dadurch gekennzeichnet, daß das erste Taktsignal ein festes Puls-Pausen-Verhältnis aufweist.

6. Verfahren nach Anspruch 5, dadurch gekennzeichnet, daß das erste Taktsignal ein erstes Rechtecksignal ist, daß das zweite Taktsignal ein Sägezahnsignal oder ein Sinussignal ist und daß das dritte Taktsignal ein zweites Rechtecksignal mit variablem Puls-Pausen-Verhältnis ist.

7. Einrichtung zur Durchführung des Verfahrens nach Anspruch 1, zur Regelung der Innenraumtemperatur, mit einem Solltemperaturgeber, mit einem Innenraumtemperaturfühler, mit einem Außentemperaturfühler, mit einem ersten Impulsgenerator, der mit einem zweiten Impulsgenerator verbunden ist, mit einem Komparator, der von dem zweiten Impulsgenerator angesteuert wird, mit einem Motor, der von dem Komparator angesteuert wird und der ein Stellglied zur Beeinflussung der einem Innenraum zugeführten Wärmemenge verstellt, dadurch gekennzeichnet, daß der Solltemperaturgeber (S), der Innenraumtemperaturfühler (I), der Außentemperaturfühler (A) und ein Lagesignalgeber (G), der ein Lagesignal entsprechend der Stellung des Stellglieds (L) erzeugt, mit einem Subtrahierer (P) verbunden sind, daß der Subtrahierer (P) mit einem ersten Eingang (E1) des Komparators (K) verbunden ist, daß der Ausgang des Komparators (K) mit einem ersten Anschluß (B1) des Motors (M) verbunden ist, daß der erste Impulsgenerator (R) zum einen mit einem zweiten Anschluß (B2) des Motors (M) und zum anderen mit dem zweiten Impulsgenerator (Z) verbunden ist und daß der zweite Impulsgenerator (Z) mit einem zweiten Eingang (E2) des Komparators (K) verbunden ist.

8. Einrichtung nach Anspruch 7, dadurch gekennzeichnet, daß der Subtrahierer (P) aus Widerständen aufgebaut ist und daß die Eingänge (E1, E2) des Komparators (K) hochohmig sind.

9. Einrichtung nach Anspruch 8, dadurch gekennzeichnet, daß der erste Impulsgenerator (R) ein Rechteckgenerator (R) ist, der Rechteckimpulse mit einem festen Puls-Pausen-Verhältnis erzeugt.

10. Einrichtung nach Anspruch 9, dadurch gekennzeichnet, daß der zweite Impulsgenerator (Z) ein Sägezahngenerator (Z) oder ein Sinusgenerator (Z) ist.

11. Einrichtung nach Anspruch 10, dadurch gekennzeichnet, daß der Rechteckgenerator (R), der Sägezahngenerator (Z) oder der Sinusgenerator (Z), der Subtrahierer (P) und/oder der Komparator (K) in einem integrierten Bauteil zusammengefaßt sind.

12. Einrichtung nach Anspruch 11, dadurch gekennzeichnet, daß in der Verbindung zwischen dem Rechteckgenerator (R) und dem Motor (M) und/oder in der Verbindung zwischen dem Komparator (K) und dem Motor (M) eine Endstufe angeordnet ist.

13. Einrichtung nach Anspruch 9, dadurch gekennzeichnet, daß der Lagesignalgeber (G) ein Potentiometer ist.

14. Einrichtung nach Anspruch 9, dadurch gekennzeichnet, daß der Lagesignalgeber (G) eine Zählschaltung für die Umdrehungen des Motors (M) ist.

15. Einrichtung nach einem der vorstehenden Ansprüche, dadurch gekennzeichnet, daß das Stellglied (L) eine Luftmischklappe ist.

16. Einrichtung nach einem der vorstehenden Ansprüche, dadurch gekennzeichnet, daß das Stellglied (L) ein Wasserventil ist.

## Claims

1. A process for controlling the cabin temperature of motor vehicles, with a specified nominal temperature and in which a cabin temperature and an outside temperature are measured, with a motor, which is pulse controlled and which adjusts an adjustment element to affect the volume of heat delivered into a cabin, by generating a first pulse signal which affects the pulse-signal generation of a second pulse signal for the purpose of controlling the motor via a comparator, **characterized** **in that** a differential signal is formed of nominal temperature, cabin temperature, outside temperature and a position signal which indicates the position of an adjustment element (L), that the first pulse signal, on the one hand, controls the motor (M) via a second connection (B2) and, on the other hand, synchronizes the second pulse signal, that the comparator (K) produces from the second pulse signal and the differential signal a third pulse signal which controls the motor (M) via a first connection (B1), and that the effective motor current corresponds with the first pulse signal and the third pulse signal.

2. A process according to claim 1, **characterized in that** the motor (M) is idle during identicity of the first and third pulse signal.

3. A process according to claim 2, **characterized in that**, in the event of non-identicity of the first and third pulse signal, the motor (M) is run in right-hand or left-hand rotation depending on a current differential signal.

4. A process according to claim 3, **characterized in that** a control process is completed when the first and third pulse signal are equal.

5. A process according to claim 4, **characterized in that** the first pulse signal has a fixed pulse-pause ratio.

6. A process according to claim 5, **characterized in that** the first pulse signal is a first square signal, that the second pulse signal is a sawtooth signal or a sine signal, and that the third pulse signal is a second square signal with variable pulse-pause ratio.

7. A device for carrying out the process according to claim 1 for controlling the cabin temperature, comprising a nominal temperature indicator, a cabin temperature feeler, an outside temperature feeler, a first pulse generator which is connected to a second pulse generator, a comparator which is controlled by a second pulse generator, a motor which is controlled by the comparator and which adjusts an adjustment element to affect the volume of heat delivered into an interior space, **character****ized in that** the nominal temperature indicator (S), the cabin temperature feeler (I), the outside temperature feeler (A) and a position signal indicator (G), which produces a position signal to correspond with the position of the control element (L), are connected to a subtractor (P), that the subtractor (P) is connected to a first input (E1) of the comparator (K), that the output of the comparator (K) is connected to a first connection (B1) of the motor (M), that the first pulse generator (R) is, on the one hand, connected to a second connection (B2) of the motor (M) and, on the other hand, to a second pulse generator (Z), and that the second pulse generator (Z) is connected to a second input (E2) of the comparator (K).

8. A device according to claim 7, **characterized in that** the subtractor (P) is composed of resistances and that the inputs (E1, E2) of the comparator (K) are high-ohmic.

9. A device according to claim 8, **characterized in that** the first pulse generator (R) is a square generator (R) which generates square pulses of a fixed pulse-pause ratio.

10. A device according to claim 9, **characterized in that** the second pulse generator (Z) is a sawtooth generator (Z) or a sine generator (Z).

11. A device according to claim 10, **characterized in that** the square generator (R), the sawtooth generator (Z) or the sine generator (Z), the subtractor (P) and/or the comparator (K) are combined in an integrated component.

12. A device according to claim 11, **characterized in that** an end stage is accommodated in the connection between the square generator (R) and the motor (M) and/or in the connection between the comparator (K) and the motor (M).

13. A device according to claim 9, **characterized in that** a position signal indicator (G) is a potentiometer.

14. A device according to claim 9, **characterized in that** the position signal indicator (G) is a counter circuit for the revolutions of the motor (M).

15. A device according to one of the above claims, **characterized in that** the adjustment element (L) is an air-mixing flap.

16. A device according to one of the above claims, **characterized in that** the adjustment element (L) is a water valve.

## Revendications

1. Procédé de régulation de la température de l'habitacle de véhicules à moteur, dans le cas duquel on émet une température prescrite, on mesure une température de l'habitacle et une température extérieure, dans le cas duquel est activé en cadence un moteur qui modifie un organe réglant pour influencer la quantité de chaleur amenée dans l'habitacle, en ce sens que l'on produit un premier signal de cadencement qui, au moyen d'un comparateur, influence la production d'un second signal de cadencement pour activer le moteur, caractérisé par le fait qu'à partir de la température prescrite, de la température de l'habitacle, de la température extérieure et d'un signal de position, qui indique la position de l'organe réglant (L), on forme un signal de différence, que le premier signal de cadencement d'une part active le moteur (M) par l'intermédiaire d'une seconde borne (B2) et d'autre part synchronise le second signal de cadencement, que le comparateur (K) forme, à partir du second signal de cadencement et du signal de différence, un troisième signal de cadencement qui active le moteur (M) par l'intermédiaire d'une première borne (BI) et que l'intensité du courant du moteur ainsi activé correspond à la différence entre le premier signal de cadencement et le troisième signal de cadencement.

2. Procédé selon la revendication 1, caractérisé par le fait qu'en cas d'égalité du premier et du troisième signaux de cadencement, le moteur (M) reste immobile.

3. Procédé selon la revendication 2, caractérisé par le fait qu'en cas d'inégalité du premier et du troisième signaux de cadencement, le moteur (M) est entraîné vers la droite ou vers la gauche selon chaque fois le signal de différence qui apparaît.

4. Procédé selon la revendication 3, caractérisé par le fait que le processus de régulation prend fin lorsque le premier et le troisième signaux de cadencement sont égaux.

5. Procédé selon la revendication 4, caractérisé par le fait que le premier signal de cadencement présente un rapport présence d'impulsion/absence d'impulsion fixe.

6. Procédé selon la revendication 5, caractérisé par le fait que le premier signal de cadencement est un premier signal rectangulaire, que le second signal de cadencement est un signal en dents de scie ou un signal sinusoïdal et que le troisième signal de cadencement est un second signal rectangulaire à rapport présence d'impulsion/absence d'impulsion variable.

7. Dispositif pour l'exécution du procédé selon la revendication 1, pour la régulation de la température de l'habitacle, comportant un émetteur de température prescrite, un capteur de température de l'habitacle, un capteur de la température extérieure, un premier générateur d'impulsions, relié à un second générateur d'impulsions, un comparateur, activé par le second générateur d'impulsions, un moteur qui est activé par le comparateur et qui modifie un organe réglant pour influencer la quantité de chaleur amenée dans l'habitacle, caractérisé par le fait que l'émetteur (S) de température prescrite, le capteur (I) de température de l'habitacle, le capteur (A) de température extérieure et un émetteur (G) du signal de position, qui produit un signal de position correspondant à la position de l'organe réglant (L), sont reliés à un soustracteur (P) que le soustracteur (P) est relié à une première entrée (El) du comparateur (K), que la sortie du comparateur (K) est reliée à une première borne (B1) du moteur (M), que le premier générateur d'impulsions (R) est relié d'une part à une seconde borne (B2) du moteur (M) et d'autre part au second générateur d'impulsions (Z) et que le second générateur d'impulsions (Z) est relié à une seconde entrée (E2) du comparateur (K).

8. Dispositif selon la revendication 7, caractérisé par le fait que le soustracteur (P) est constitué de résistances et que les entrées (E1, E2) du comparateur (K) sont à résistance élevée.

9. Dispositif selon la revendication 8, caractérisé par le fait que le premier générateur d'impulsions (R) est un générateur d'impulsions rectangulaires (R) qui produit des impulsions rectangulaires à rapport présence d'impulsion/absence d'impulsion fixe.

10. Dispositif selon la revendication 9, caractérisé par le fait que le second générateur d'impulsions (Z) est un générateur d'impulsions en dents de scie (Z) ou un générateur d'impulsions sinusoïdales (Z).

11. Dispositif selon la revendication 10, caractérisé par le fait que le générateur d'impulsions rectangulaires (R), le générateur d'impulsions en dents de scie (Z) ou le générateur d'impulsions sinusoïdales (Z), le soustracteur (P) et/ou le comparateur (K) sont regroupés en un composant intégré.

12. Dispositif selon la revendication 11, caractérisé par le fait que sur la liaison entre le générateur d'impulsions rectangulaires (R) et le moteur (M) et/ou sur la liaison entre le comparateur (K) et le moteur (M) est disposé un étape final.

13. Dispositif selon la revendication 9, caractérisé par le fait que l'émetteur de signaux de position (G) est un potentiomètre.

14. Dispositif selon la revendication 9, caractérisé par le fait que l'émetteur de signaux de position (G) est un circuit de comptage des rotations du moteur (M).

15. Dispositif selon l'une des revendications précédentes, caractérisé par le fait que l'organe réglant (L) est un volet de mélange de l'air.

16. Dispositif selon l'une des revendications précédentes, caractérisé par le fait que l'organe réglant (L) est un robinet à eau.
